# DEMANDE DE BREVET EUROPEEN

(11) **EP 1 897 443 A1**
(43) Date de publication de la demande: **12.03.2008**
(21) Numéro de dépôt: 06360041.5
(22) Date de dépôt: 11.09.2006
(51) Int. Cl.: A21B 1/08, A21B 1/14

(54) **Four à pain**

(71) Demandeur: BONGARD (S.A.), F-67810 Holtzheim (FR)
(72) Inventeur: Depiesse, Thierry, 67207 Niederhausbergen (FR); Assens, Olivier, 67370 Dingsheim (FR)
(74) Mandataire: Merckling, Norbert

(57) **Abrégé**

La présente invention concerne un four comportant un bâti dans lequel sont agencés au moins un compartiment de cuisson (7) et des moyens chauffants, lesquels comportent un ensemble de tubes métalliques (6) juxtaposés, identiques, étanches et contenant de l'eau, lesdits tubes (6) constituant chacun un circuit fermé indépendant et présentant une première portion (8, 8a, 8b) délimitant partiellement et localement le ou les compartiments de cuisson (7), une seconde portion (9) s'étendant dans un premier échangeur thermique (10) transmettant l'énergie thermique aux tubes (6) et une troisième portion (13) s'étendant au-dessus de l'échangeur thermique (10) et sous l'espace délimitant le ou les compartiments de cuisson (7), la seconde portion (9) de chacun des tubes entourant au moins en partie le foyer (17) pour être en contact avec le flux des gaz de combustion s'échappant du foyer (17).

Selon l'invention, chaque tube (6) comporte une quatrième portion (14) disposée entre la troisième portion (13) et la première portion (8, 8a, 8b) et s'étendant dans un second échangeur thermique (15), lequel transmet aux tubes (6) une énergie thermique additionnelle

## Description

La présente invention se rapporte au domaine technique général des fours et en particulier au domaine technique des fours destinés à la cuisson de pain. De tels fours sont largement répandus dans les boulangeries artisanales ou industrielles.

Certains types de fours utilisent comme éléments chauffants des tubes de circulation de vapeur d'eau. Ces tubes de circulation de vapeur d'eau entourent en général au moins en partie le ou les compartiments de cuisson. Ils sont associés à un échangeur thermique lequel permet de porter l'eau contenue dans les tubes à une température dépassant les 100°C. L'eau se transforme alors en vapeur d'eau circulant dans les tubes.

On connaît ainsi un four comportant un bâti dans lequel sont agencés au moins un compartiment de cuisson et des moyens chauffants, lesquels comportent un ensemble de tubes métalliques juxtaposés, identiques et étanches, contenant de l'eau. Les tubes constituent chacun un circuit fermé indépendant et présentent une première portion délimitant partiellement et localement le ou les compartiments de cuisson, une seconde portion s'étendant dans un échangeur thermique transmettant l'énergie thermique aux tubes et une troisième portion s'étendant horizontalement au-dessus de l'échangeur thermique et sous l'espace délimitant le ou les compartiments de cuisson. Les différentes portions de chaque tube métallique sont reliées de manière à constituer un circuit fermé de circulation de vapeur d'eau.

L'échangeur thermique comporte une chambre cylindrique entourant un foyer de combustion cylindrique avec une extrémité avant reliée à un brûleur alimenté en combustible et avec une extrémité arrière, opposée à l'extrémité avant, communiquant avec un espace annulaire délimité entre le foyer cylindrique et la chambre cylindrique. La seconde portion de chacun des tubes entoure au moins en partie le foyer cylindrique et s'étend dans l'espace annulaire pour être en contact avec le flux des gaz de combustion s'échappant du foyer de combustion et circulant dans ledit espace annulaire.

Malgré les qualités que l'on reconnaît à un tel système de chauffage pour fours, il reste à améliorer certains aspects et en particulier sa consommation d'énergie. En effet les fours de ce type, qu'ils soient utilisés dans des boulangeries artisanales ou industrielles sont en service quotidiennement et pendant de longues heures, pour cuire des articles, le cas échéant à la demande. Compte tenu du prix élevé des combustibles, en particulier du gaz et du fioul, qui sont utilisés pour chauffer ces fours, on est confronté à une augmentation des frais de fonctionnement et d'utilisation de ces fours.

Le but de la présente invention vise donc à optimiser le bilan thermique de tels fours et par conséquent à réduire leur consommation de combustibles.

Selon l'invention, chaque tube métallique comporte une quatrième portion disposée entre la troisième portion et la première portion et qui s'étend dans un second échangeur thermique, lequel transmet aux tubes une énergie thermique additionnelle grâce à la récupération du flux des gaz de combustion s'échappant du premier échangeur thermique et circulant à travers ledit second échangeur thermique, la quatrième portion de chacun des tubes étant disposée sur le trajet du flux des gaz de combustion, lesquels sont évacués en aval du second échangeur thermique par un collecteur.

On obtient ainsi des résultats remarquables. En effet, un four conforme à l'invention permet de diminuer d'environ 20% l'énergie consommée et de réduire de façon correspondante la consommation en combustible. On améliore ainsi la récupération de l'énergie thermique émise lors de la combustion.

A titre d'exemple, les gaz de combustion évacués par un four conforme à l'invention présentent une température approximativement égale à celle du four alors que les fours connus, fonctionnant sur un même principe de chauffage, évacuent des gaz de combustion à une température supérieure de plus de 100°C à la température du four. On réutilise les gaz de combustion sortant d'un premier échangeur thermique pour en extraire davantage d'énergie calorifique.

Un autre avantage lié à la présente invention est obtenu avec un faible encombrement des deux échangeurs thermiques dans la partie basse du four. En effet le second échangeur thermique peut se loger dans un compartiment disponible et adjacent au premier échangeur thermique. Il n'est donc pas nécessaire d'empiéter sur un volume destiné par exemple à l'agencement de compartiments de cuisson.

Un autre avantage réside dans des modifications ou adaptations mineures des éléments constitutifs des fours actuels pour réaliser un four conforme à l'invention. Il suffit en effet d'y intégrer un second échangeur thermique et de modifier la conformation des tubes métalliques.

Selon un exemple de réalisation conforme à l'invention, la troisième portion des tubes s'étend sensiblement horizontalement et constitue un élément chauffant de sole du compartiment de cuisson disposé directement au-dessus des échangeurs thermiques.

Chaque première portion présente par exemple une forme en U renversé avec une branche supérieure horizontale constituant un élément chauffant de voûte d'un compartiment de cuisson situé à un niveau de hauteur le plus élevé, deux branches latérales verticales et des branches horizontales intermédiaires reliant les deux branches latérales verticales en constituant des éléments chauffants de sole et de voûte de compartiments de cuisson intermédiaires. Des plateaux en ciment réfractaire sont par exemple disposés au-dessus des branches horizontales intermédiaires des tubes pour constituer les surfaces d'enfournement des compartiments de cuisson.

Chaque tube métallique est réalisé par exemple par cintrage et par soudage. Les tubes métalliques sont par exemple en acier.

Selon un exemple de réalisation conforme à l'invention, le second échangeur thermique comporte un espace annulaire complémentaire dans lequel s'étendent les quatrièmes portions des tubes métalliques, ledit espace annulaire complémentaire comportant d'une part une entrée communiquant avec le premier échangeur via un canal au voisinage du côté avant du four et d'autre part une sortie communiquant avec le collecteur disposé sur le côté arrière du four et en aval du second échangeur thermique.

Le second échangeur comporte également une chambre cylindrique complémentaire et un noyau cylindrique central délimitant l'espace annulaire complémentaire, les quatrièmes portions entourant au moins en partie le noyau central cylindrique. Le noyau central est de préférence fermé pour éviter une accumulation de gaz de combustion. La chambre cylindrique et la chambre cylindrique complémentaire sont de préférence confinées dans des espaces délimités à l'aide de parois pourvues d'un isolant thermique. Les risques de déperditions thermiques sont ainsi limitées. En outre, le second échangeur thermique est dépourvu de brûleur, réduisant ainsi substantiellement son coût de fabrication.

Selon un autre exemple de réalisation conforme à l'invention, le noyau central présente une ouverture obturable à son extrémité avant. Le noyau central constitue ainsi un second foyer de combustion, utilisé pour y brûler par exemple du bois ou tout combustible différent du combustible brûlé dans l'échangeur thermique. On peut ainsi réaliser un four bi-énergies. L'ouverture obturable est de préférence accessible à partir de la face avant du four. Une ouverture d'évacuation des fumées de combustion est alors prévue sur le noyau central.

Selon un exemple de réalisation conforme à l'invention, l'épaisseur de l'espace annulaire complémentaire est comprise entre 30mm et 70mm et l'épaisseur de l'espace annulaire du premier échangeur thermique est par exemple comprise entre 30mm et 70mm. Le diamètre des tubes métalliques est d'environ 21 mm à titre d'exemple.

L'épaisseur de l'espace annulaire est défini par la différence entre le diamètre de la chambre cylindrique et le diamètre du foyer de combustion et l'épaisseur de l'espace annulaire complémentaire est défini par la différence entre le diamètre de la chambre cylindrique complémentaire et le diamètre du noyau central.

Un tel dimensionnement de l'espace annulaire de chaque échangeur thermique permet d'optimiser d'une part l'évacuation des gaz de combustion et d'autre part le transfert d'énergie du flux des gaz de combustion à l'eau contenue dans les tubes métalliques et d'améliorer par conséquent le rendement du four.

Selon un exemple de réalisation, les secondes portions des tubes constituent sensiblement des boucles, s'étendant dans des plans verticaux successifs, et présentent dans l'espace annulaire, un décalage vertical et/ou horizontal en passant d'une boucle à une boucle suivante.

Selon un exemple de réalisation, les quatrièmes portions constituant sensiblement des boucles s'étendant dans des plans verticaux successifs, présentent dans l'espace annulaire complémentaire, un décalage vertical et/ou horizontal en passant d'une boucle à une boucle suivante.

Le positionnement relatif de ces portions de tubes, en forme de boucles décalées les unes par rapport aux autres améliore l'échange thermique dans l'espace annulaire et dans l'espace annulaire complémentaire.

Selon un exemple de réalisation conforme à l'invention, le collecteur peut comporter un moyen de ventilation forcée ou naturelle.

D'autres caractéristiques et avantages ressortiront également de la description détaillée figurant ci-après donnée à titre d'exemple en référence aux dessins annexés, non limitatifs, dans lesquels :
- la figure 1 est une vue en perspective partiellement découpée d'un exemple de réalisation d'un four conforme à l'invention ;
- la figure 2 est une vue de dessus en coupe horizontale d'un four conforme à l'invention ;
- la figure 3 est une vue de face en coupe d'un exemple de réalisation d'un four conforme à l'invention ;
- la figure 4 est une vue de dessus et en coupe, représentant une partie d'un four conforme à l'invention et notamment un exemple de réalisation de son échangeur thermique dans lequel les secondes portions des tubes adjacents sont décalées les unes par rapport aux autres;
- la figure 5 est une représentation en vue de dessus et en coupe d'un autre exemple de réalisation d'un four conforme à l'invention, comportant un second foyer de combustion.

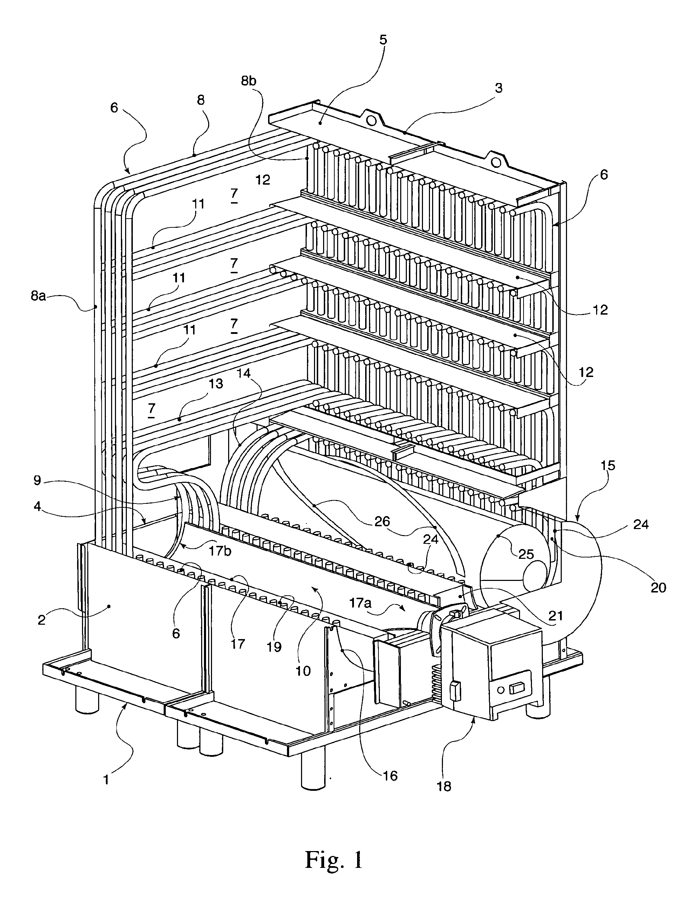

Un exemple de réalisation d'un four conforme à l'invention est par exemple représenté à la figure 1. Le four comporte un socle (1) surmonté de deux parois latérales (2) et (3) montantes, une paroi arrière (4) montante et une paroi supérieure (5). Les parois latérales (2) et (3), la paroi arrière (4) et la paroi supérieure (5) sont par exemple revêtues d'une ou plusieurs couches d'isolant thermique ainsi que d'un habillage extérieur non représentés.

Le four comporte également des moyens chauffants constitués de tubes métalliques (6) juxtaposés et identiques. Ces tubes métalliques présentent à titre d'exemple un diamètre d'environ 21 mm. Les tubes métalliques (6) sont étanches et contiennent de l'eau de manière à constituer pour chacun d'entre eux un circuit fermé et indépendant de circulation d'eau. Cette dernière est transformée en vapeur d'eau présentant une température dépassant les 100°C de manière à générer une circulation naturelle de vapeur d'eau dans les tubes métalliques et à transmettre l'énergie thermique à des compartiments de cuisson (7).

Les tubes métalliques (6) délimitent partiellement et localement le ou les compartiments de cuisson (7). Ces derniers sont donc avantageusement pourvus d'éléments chauffants de sole de voûte ainsi que d'éléments chauffants latéraux, entourant le compartiment de cuisson (7).

Chaque tube métallique (6) présente une première portion (8, 8a, 8b) entourant l'espace dans lequel sont agencés les compartiments de cuisson (7). Chaque première portion (8, 8a, 8b) présente une forme en U renversé, avec une branche supérieure horizontale (8) constituant un élément chauffant de voûte d'un compartiment de cuisson (7) situé à un niveau de hauteur le plus élevé dans le four. La première portion (8, 8a, 8b) comporte également deux branches latérales verticales (8a, 8b) s'étendant le long de la face intérieure des parois latérales (3, 2) montantes.

Chaque tube métallique (6) présente également une seconde portion (9) s'étendant dans un premier échangeur thermique (10). La seconde portion (9) présente une forme sensiblement circulaire ou en boucle obtenue par exemple par cintrage du tube métallique (6).

Le tube métallique (6) comporte également des branches horizontales intermédiaires (11) reliant entre elles les branches verticales latérales (8a) et (8b). Des plateaux (12) en ciment réfractaire peuvent ainsi être disposés au-dessus des branches horizontales intermédiaires (11) pour constituer les surfaces d'enfournement des compartiments de cuisson (7).

Chaque tube métallique (6) comporte également une troisième portion (13) réalisée sous forme de branche horizontale basse reliant la seconde portion (9) à une quatrième portion (14) de forme similaire ou identique à ladite seconde portion (9). Cette quatrième portion (14) s'étend dans un second échangeur thermique (15) disposé à côté du premier échangeur thermique (10), sous les compartiments de cuisson (7).

Le premier échangeur thermique (10) comporte une chambre cylindrique (16) entourant un foyer de combustion (17) cylindrique. Une extrémité avant (17a) du foyer de combustion (17) comporte un brûleur (18) alimenté en combustible. Une extrémité arrière (17b) du foyer de combustion (17) communique avec un espace annulaire (19) délimité entre ledit foyer de combustion (17) et la chambre cylindrique (16). La seconde portion (9) de chacun des tubes métalliques (6) s'étend dans cet espace annulaire (19).

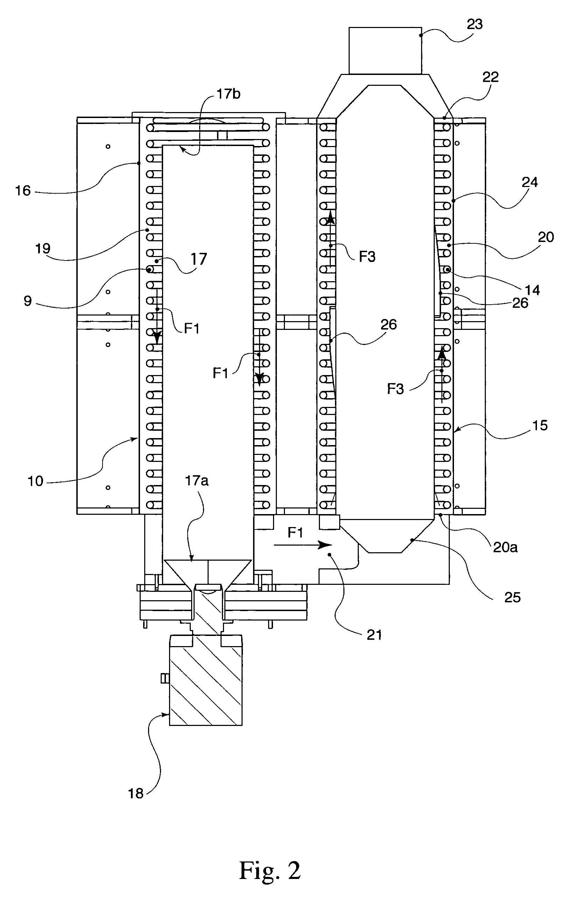

Le second échangeur thermique (15) comporte un espace annulaire complémentaire (20) dans lequel s'étendent les quatrièmes portions (14) des tubes métallique (6). L'espace annulaire complémentaire (20) comporte d'une part une entrée communiquant avec le premier échangeur thermique (10) par l'intermédiaire d'un canal (21) au voisinage du côté avant du four et d'autre part un orifice de sortie (22) (cf. figure 2) communiquant avec un collecteur (23) disposé sur le côté arrière du four et en aval du second échangeur thermique (15) (cf. figure 2).

Le second échangeur thermique (15) comporte également une chambre cylindrique complémentaire (24) et un noyau cylindrique central (25) délimitant l'espace annulaire complémentaire (20). Les quatrièmes portions (14) des tubes métalliques (6) entourent au moins en partie le noyau cylindrique central (25) et s'étendent par conséquent dans l'espace annulaire complémentaire (20).

Le noyau cylindrique central (25) est par exemple pourvu sur sa surface extérieure de bords spiralés (26) lui permettant de reposer dans l'espace délimité par les quatrièmes portions (14) en conservant une épaisseur sensiblement constante de l'espace annulaire complémentaire (20). Les bords spiralés (26) permettent en outre de forcer les gaz de combustion dans un mouvement hélicoïdal autour du noyau central (25), favorisant ainsi l'échange thermique. Le noyau cylindrique central (25) est de préférence fermé et étanche pour éviter l'accumulation de gaz de combustion.

La figure 2 montre plus en détail la configuration et l'agencement du premier échangeur thermique (10) ainsi que du second échangeur thermique (15). Il apparaît ainsi que les gaz de combustion issus de la flamme du brûleur (18) sont expulsés du foyer de combustion (17) par l'intermédiaire d'un orifice de sortie à l'extrémité opposée (17b) pour ensuite circuler dans l'espace annulaire (19) du côté arrière du four vers le côté avant du four selon les flèches F1. Les gaz de combustion transmettent donc les calories ou une grande partie des calories aux secondes portions (9) disposées sur le trajet desdits gaz de combustion. Ces derniers sont ensuite évacués de l'espace annulaire (19) par l'intermédiaire du canal (21), suivant la flèche F2, vers l'espace annulaire complémentaire (20) dans lequel s'étendent les quatrièmes portions (14) des tubes métalliques (6). Ces dernières sont également disposées sur le trajet des gaz de combustion, matérialisé par exemple par les flèches F3. Les gaz de combustion circulent ainsi du côté avant du four vers le côté arrière dans le second échangeur thermique (15) par exemple selon un trajet hélicoïdal.

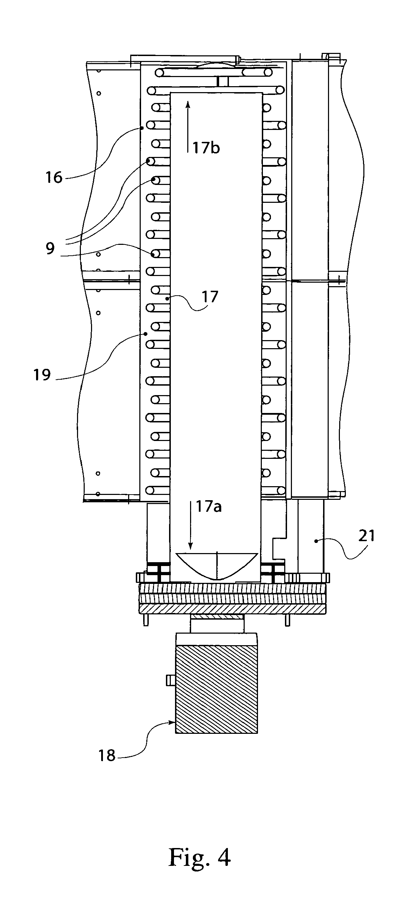

Les boucles formant les secondes portions (9) sont par exemple décalées horizontalement et/ou verticalement en passant d'une boucle à une suivante dans l'espace annulaire (19). Ce positionnement dans le flux des gaz de combustion permet un échange thermique amélioré. Un tel positionnement relatif des boucles des tubes métalliques (6) peut également s'appliquer aux quatrièmes portions (14) s'étendant dans l'espace annulaire complémentaire (20). Un tel exemple de réalisation est représenté à la figure 4.

Le collecteur (23) permet, par exemple par l'intermédiaire d'une cheminée verticale, d'évacuer les gaz de combustion résiduels à l'extrémité de leur trajet dans l'espace annulaire complémentaire (20). Les calories récupérées au niveau des échangeurs thermiques (10) et (15) sont restituées avantageusement aux compartiments de cuisson (7) par l'intermédiaire des branches (8, 8a, 8b, 11, 13) des tubes métalliques (6).

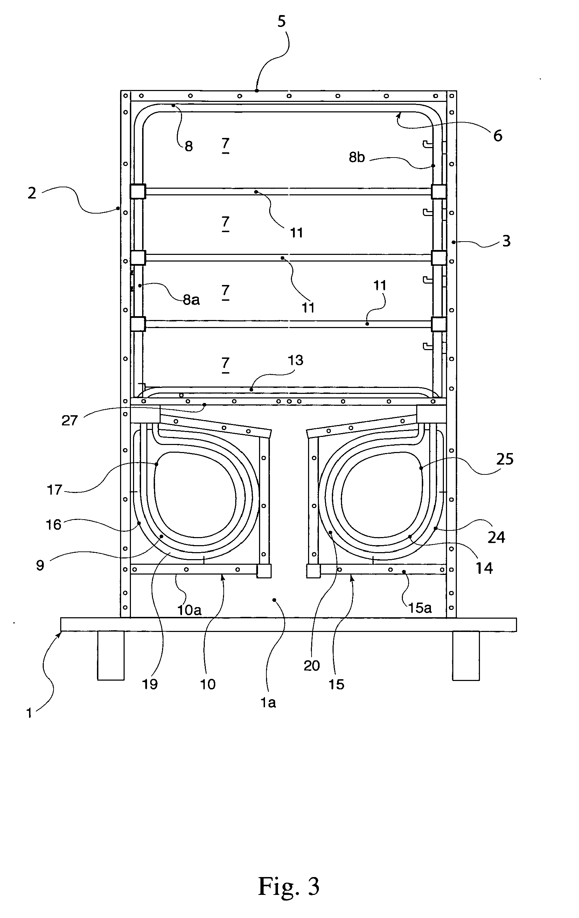

La figure 3 montre par exemple une vue de face en coupe d'un four conforme à l'invention. Les échangeurs thermiques (10, 15) sont agencés dans une partie basse (1a) du four, ils sont de préférence insérés dans des caissons correspondants (10a, 15a) présentant une isolation thermique. Une paroi horizontale (27) sépare la partie basse (1a) du four de l'espace occupé par les compartiments de cuisson (7). Chacun des tubes métalliques (6) traverse cette paroi de séparation (27), laquelle peut être pourvue de moyens isolants thermiques. Des ouvertures correspondantes permettent à la troisième portion (13) de traverser la paroi de séparation (27) et de s'étendre horizontalement au-dessus de la paroi de séparation (27) tandis que les secondes portions (9) et les quatrièmes portions (14) s'étendent en dessous de ladite paroi de séparation (27). Cette dernière est également traversée à ses côtés latéraux par les branches (8a) et (8b) des tubes métalliques (6). La troisième portion (13) réalise ainsi un élément chauffant de sole du premier compartiment de cuisson (7) disposé directement au-dessus des échangeurs thermiques (10) et (15).

Le foyer de combustion (17) cylindrique est par exemple réalisé en acier inoxydable réfractaire et la chambre cylindrique (16) est par exemple réalisée en acier standard.

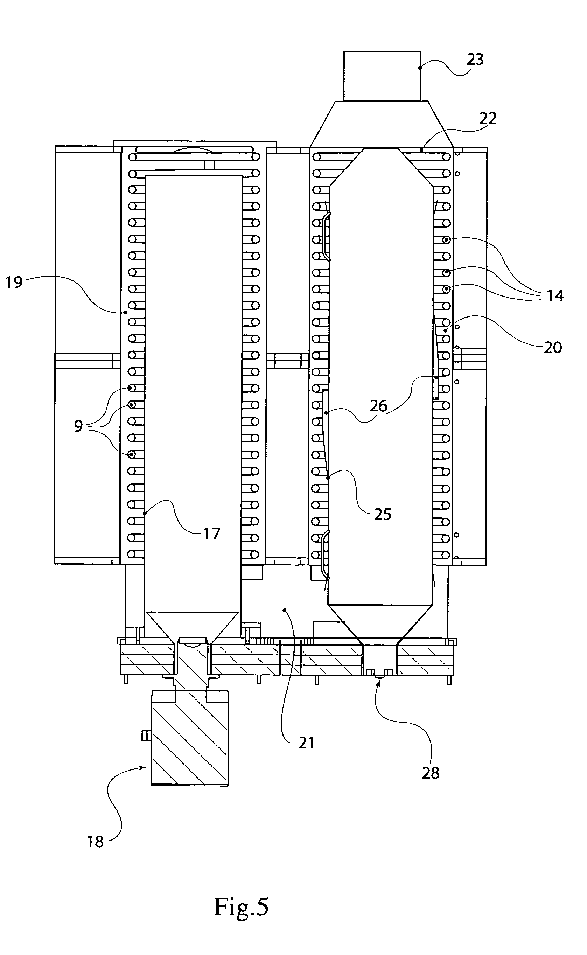

Dans l'exemple de réalisation représenté à la figure 5, le four conforme à l'invention comporte un noyau central (25) pourvu d'une ouverture obturable (28) à son extrémité avant. L'ouverture obturable (28) est accessible à partir de la face avant du four. Le noyau central (25) peut ainsi constituer, si on le souhaite, un second foyer de combustion. Ce dernier peut être utilisé pour y brûler par exemple du bois ou tout autre combustible, différent du combustible brûlé dans le premier échangeur thermique (10).

Il est évident que diverses caractéristiques techniques décrites pour l'un ou l'autre des exemples de réalisation peuvent être transposées aux autres exemples de réalisation sans sortir du cadre de la présente invention.

## Revendications

1. Four comportant un bâti dans lequel sont agencés au moins un compartiment de cuisson (7) et des moyens chauffants, lesquels comportent un ensemble de tubes métalliques (6) juxtaposés, identiques, étanches et contenant de l'eau, lesdits tubes (6) constituant chacun un circuit fermé indépendant et présentant une première portion (8, 8a, 8b) délimitant partiellement et localement le ou les compartiments de cuisson (7), une seconde portion (9) s'étendant dans un premier échangeur thermique (10) transmettant l'énergie thermique aux tubes (6) et une troisième portion (13) s'étendant au-dessus de l'échangeur thermique (10) et sous l'espace délimitant le ou les compartiments de cuisson (7), l'échangeur (10) comportant une chambre cylindrique (16) entourant un foyer de combustion (17) cylindrique dont une extrémité avant (17a) comporte un brûleur (18) alimenté en combustible et dont une extrémité arrière (17b) opposée à l'extrémité avant (17a) communique avec un espace annulaire (19) délimité entre le foyer (17) cylindrique et la chambre cylindrique (16), la seconde portion (9) de chacun des tubes entourant au moins en partie le foyer (17) cylindrique en s'étendant dans l'espace annulaire (19) pour être en contact avec le flux des gaz de combustion s'échappant du foyer (17) et circulant dans l'espace annulaire (19), **caractérisé en ce que** chaque tube (6) comporte une quatrième portion (14) disposée entre la troisième portion (13) et la première portion (8, 8a, 8b) et s'étendant dans un second échangeur thermique (15), lequel transmet aux tubes (6) une énergie thermique additionnelle grâce à la récupération du flux des gaz de combustion s'échappant du premier échangeur thermique (10) et circulant à travers ledit second échangeur thermique (15), la quatrième portion (14) de chacun des tubes (6) étant disposée sur le trajet du flux des gaz de combustion, lesquels sont évacués en aval du second échangeur thermique (15) par un collecteur (23).

2. Four selon la revendication 1, **caractérisé en ce que** la troisième portion (13) constitue un élément chauffant de sole du compartiment de cuisson (7) disposé directement au-dessus des échangeurs thermiques (10) et (15).

3. Four selon la revendication 1 ou 2, **caractérisé en ce que** chaque première (8, 8a, 8b) portion présente une forme en U renversé avec une branche supérieure horizontale (8) constituant un élément chauffant de voûte d'un compartiment de cuisson (7) situé à un niveau de hauteur le plus élevé, deux branches latérales verticales (8a, 8b) et des branches horizontales intermédiaires (11) reliant les deux branches latérales verticales (8a, 8b) en constituant des éléments chauffants de sole et de voûte de compartiments de cuisson (7) intermédiaires.

4. Four selon l'une quelconque des revendications 1 à 3, **caractérisé en ce que** chaque tube métallique (6) est réalisé par cintrage et soudage.

5. Four selon l'une quelconque des revendications 1 à 4, **caractérisé en ce que** le second échangeur thermique (15) comporte un espace annulaire complémentaire (20) dans lequel s'étendent les quatrièmes portions (14) des tubes métalliques (6), ledit espace annulaire complémentaire (20) comportant d'une part une entrée (20a) communiquant avec le premier échangeur (10) via un canal (21) au voisinage du côté avant du four et d'autre part un orifice de sortie (22) communiquant avec le collecteur (23) disposé sur le côté arrière du four et en aval du second échangeur thermique (15).

6. Four selon la revendication 5, **caractérisé en ce que** le second échangeur (15) comporte une chambre complémentaire (24) et un noyau central (25) délimitant l'espace annulaire complémentaire (20), les quatrièmes portions (14) entourant au moins en partie le noyau central (25).

7. Four selon la revendication 5 ou 6, **caractérisé en ce que** l'épaisseur de l'espace annulaire complémentaire (20) est comprise entre 30mm et 70mm lorsque le diamètre des tubes métalliques (6) est approximativement égal à 21 mm.

8. Four selon l'une quelconque des revendications 1 à 7, **caractérisé en ce que** l'épaisseur de l'espace annulaire (19) du premier échangeur thermique (10) est comprise entre 30mm et 70mm lorsque le diamètre des tubes métalliques est approximativement égal à 21 mm.

9. Four selon la revendication 3, **caractérisé en ce qu'**il comporte des plateaux (12) en ciment réfractaire disposés au-dessus des branches horizontales intermédiaires (11) des tubes métalliques (6) pour constituer des surfaces d'enfournement des compartiments de cuisson (7).

10. Four selon l'une quelconque des revendications 1 à 9, **caractérisé en ce que** le collecteur (23) comporte un moyen de ventilation forcée ou naturelle.

11. Four selon l'une quelconque des revendications 1 à 10, **caractérisé en ce que** les secondes portions (9) constituant sensiblement des boucles s'étendant dans des plans verticaux successifs présentent dans l'espace annulaire (19) un décalage vertical et/ou horizontal en passant d'une boucle à une boucle suivante.

12. Four selon l'une quelconque des revendications 1 à 11, **caractérisée en ce que** les quatrièmes portions (14) constituant sensiblement des boucles s'étendant dans des plans verticaux successifs, présentent dans l'espace annulaire complémentaire (20), un décalage vertical et/ou horizontal en passant d'une boucle à une boucle suivante.

13. Four selon la revendication 6, **caractérisé en ce que** le noyau central (25) présente une ouverture obturable (28) à son extrémité avant, ledit noyau central (25) constituant ainsi une second foyer de combustion, utilisé pour y brûler par exemple un combustible différent du combustible brûlé dans l'échangeur thermique (10).
